# EUROPÄISCHE PATENTSCHRIFT

(11) **EP 3 811 261 B1**
(45) Veröffentlichungstag und Bekanntmachung des Hinweises auf die Patenterteilung: **19.04.2023**
(21) Anmeldenummer: 19727323.8
(22) Anmeldetag: 22.05.2019
(51) Int. Cl.: G06F 21/57, G06F 21/51, G06F 21/56, G06F 21/64, H04L 9/32, G06F 12/14

(54) **KRYPTOGRAFIEMODUL UND BETRIEBSVERFAHREN HIERFÜR**
CRYPTOGRAPHY MODULE AND METHOD FOR OPERATING SAME
MODULE CRYPTOGAPHIQUE ET PROCÉDÉ DE FONCTIONNEMENT

(30) Priorität: 20.06.2018 DE 102018209965; 13.07.2018 DE 102018211752; 13.08.2018 DE 102018213616
(43) Veröffentlichungstag der Anmeldung: 28.04.2021
(73) Patentinhaber: Robert Bosch GmbH, 70442 Stuttgart (DE)
(72) Erfinder: SCHRAMM, Juergen, 74321 Bietigheim-Bissingen (DE); JUNG, Ramona, 70499 Stuttgart (DE); LENZ, Christoph, 71522 Backnang (DE); MEURER, Alexander, 44791 Bochum (DE); STUMPF, Frederic, 71229 Leonberg (DE); WEBER, Andreas, 71287 Weissach (DE); ZIEGLER, Florian, 70378 Stuttgart (DE); SAGAR, Ilias, 70469 Stuttgart (DE)
(86) Internationale Anmeldenummer: PCT/EP2019/063187
(87) Internationale Veröffentlichungsnummer: WO 2019/242970

(56) Entgegenhaltungen:
- US-A1- 2005 193 217
- US-A1- 2009 327 678
- US-A1- 2013 117 578
- US-A1- 2014 068 766
- US-A1- 2018 150 637

## Beschreibung

### Stand der Technik

Die Erfindung betrifft ein Kryptografiemodul. Die Erfindung betrifft ferner ein Betriebsverfahren für ein derartiges Kryptografiemodul.

Aus der DE 10 2009 046436 A1 ist ein kryptografisches Hardwaremodul bekannt. US 2013/117578 A1 beschreibt ein Verfahren zum Verifizieren eines Speicherblocks eines nichtflüchtigen Speichers. US 2018/150637 A1 beschreibt ein Verfahren zum sicheren Booten eines Computersystems. US 2009/0327678 A1 beschreibt ein System und Verfahren zur Ausführung einer pre-boot Sicherheitsverfikation. US 2014/0068766 A1 beschreibt eine Durchsetzung einer sicheren Codeüberprüfung in einem vertrauenswürdigen Computergerät. US 2005/193217 A1 beschreibt Verfahren und Vorrichtungen für ein elektronisches Gerät, das einen autonomen Speicherprüfer zur Gewährleistung der Laufzeitsicherheit aufweist.

### Offenbarung der Erfindung

Es ist Aufgabe der vorliegenden Erfindung, ein Kryptografiemodul mit gesteigertem Gebrauchsnutzen anzugeben.

Diese Aufgabe wird bei dem Kryptografiemodul der eingangs genannten Art durch die Merkmalskombination des Patentanspruchs 1 gelöst. Dadurch ist vorteilhaft die Möglichkeit gegeben, einen Inhalt des Speicherbereichs beispielsweise auf Abweichungen gegenüber einem vorgebbaren Inhalt hin zu überprüfen. Hierdurch kann vorteilhaft beispielsweise die Ausführung von unsicheren bzw. durch einen Angreifer kompromittierten Computerprogrammen durch die Recheneinrichtung verhindert werden. Weiter vorteilhaft kann dem Kryptografiemodul mittels des ersten Steuerbefehls der zu überprüfende Speicherbereich bzw. die zu überprüfenden Speicherbereiche signalisiert werden (z.B. Adressinformationen, welche Speicherblöcke zu überprüfen sind), so dass diese Informationen z.B. nicht vorkonfiguriert werden müssen. Vielmehr kann der zu überprüfende Speicherbereich bzw. können die zu überprüfenden Speicherbereiche dynamisch (z.B. zur Laufzeit des Kryptografiemoduls bzw. der Recheneinrichtung) mittels des ersten Steuerbefehls signalisiert werden, wodurch die Flexibilität weiter gesteigert wird.

Bei bevorzugten Ausführungsformen kann die Speichereinrichtung extern zu dem Kryptografiemodul und der Recheneinrichtung angeordnet sein. Bei weiteren bevorzugten Ausführungsformen kann die Speichereinrichtung jedoch auch in die Recheneinrichtung integriert sein. Bei noch weiteren bevorzugten Ausführungsformen kann vorteilhaft auch ein Ein-chip-System (englisch: systemon-a-chip, SoC) vorgesehen sein, das die Recheneinrichtung, die Speichereinrichtung und wenigstens ein Kryptografiemodul gemäß den Ausführungsformen aufweist.

Bei weiteren bevorzugten Ausführungsformen kann die Recheneinrichtung wenigstens einen Rechenkern aufweisen und/oder einen Mikroprozessor und/oder einen Mikrocontroller oder dergleichen.

Bei weiteren bevorzugten Ausführungsformen ist vorgesehen, dass das Kryptografiemodul dazu ausgebildet ist, die Überprüfung des wenigstens einen Speicherbereichs unter Verwendung eines schlüsselbasierten Nachrichtenauthentifizierungscodes, CMAC (Cipher-based Message Authentication Code), auszuführen. Dadurch ist eine besonders effiziente Überprüfung ermöglicht. Eine Internetpublikation, die sich auf eine beispielhafte Ausgestaltung des CMAC-Verfahrens bezieht, ist beispielsweise unter https://doi.org/10.6028%2Fnist.sp.800-38b abrufbar.

Bei weiteren bevorzugten Ausführungsformen ist vorgesehen, dass das Kryptografiemodul eine, vorzugsweise in das Kryptografiemodul integrierte, Speichereinheit zur Speicherung wenigstens eines Referenzwerts und/oder eines Referenzlayouts für den wenigstens einen Speicherbereich aufweist. Bei weiteren bevorzugten Ausführungsformen kann der Referenzwert beispielsweise einen CMAC-Wert für einen vorgebbaren Speicherinhalt repräsentieren, der beispielsweise mit einem CMAC-Wert vergleichbar ist, der bei der Überprüfung des wenigstens einen Speicherbereichs durch das Kryptografiemodul ermittelt worden ist. Sofern der ermittelte CMAC-Wert von dem Referenzwert abweicht, kann auf eine unzulässige Veränderung des Speicherinhalts des überprüften Speicherbereichs geschlossen werden.

Bei weiteren bevorzugten Ausführungsformen ist vorgesehen, dass das Kryptografiemodul dazu ausgebildet ist, die Überprüfung in Abhängigkeit des Referenzwerts auszuführen. Bei diesen Ausführungsformen umfasst die Überprüfung beispielsweise die Bildung eines CMAC-Werts in Abhängigkeit des Speicherinhalts des wenigstens einen Speicherbereichs und einen Vergleich des so gebildeten CMAC-Werts mit dem Referenzwert, wie er beispielsweise in der Speichereinheit des Kryptografiemoduls hinterlegt ist. Alternativ oder ergänzend kann der Referenzwert bei weiteren bevorzugten Ausführungsformen auch mittels des ersten Steuerbefehls an das Kryptografiemodul gesendet werden. Weiter alternativ oder ergänzend können bei weiteren Ausführungsformen auch mehrere Referenzwerte für mehrere zu überprüfende Speicherbereiche mittels des ersten Steuerbefehls an das Kryptografiemodul gesendet werden.

Bei weiteren bevorzugten Ausführungsformen kann das Referenzlayout ein oder mehrere der folgenden Informationen enthalten: a) Anzahl der Speicherbereiche in der Speichereinrichtung, auf die die Recheneinrichtung zugreifen kann, b) Adressbereich (Startadresse und/oder Endadresse) der betreffenden Speicherbereiche, c) Länge der betreffenden Speicherbereiche, d) wenigstens einen Referenzwert (beispielsweise ein CMAC-Wert) des betreffenden Speicherbereichs, e) Daten betreffend eine kryptografische Signatur, beispielsweise eine Signaturadresse und/oder einen Signaturtyp und/oder eine Referenz auf ein übergeordnetes Zertifikat ("root certificate"). Die Informationen können bevorzugt in einer mehrere entsprechende Datenfelder aufweisenden Datenstruktur gespeichert sein.

Bei weiteren bevorzugten Ausführungsformen kann das Kryptografiemodul die vorstehend genannten Referenzwerte bzw. das Referenzlayout nutzen, um die Art und den Umfang einer Überprüfung wenigstens eines Speicherbereichs festzulegen. Beispielsweise kann anhand einer Startadresse und Endadresse die Menge der Eingangsdaten für die Überprüfung (z.B. CMAC-Wert-Bildung) festgelegt werden.

Bei weiteren bevorzugten Ausführungsformen ist vorgesehen, dass das Kryptografiemodul dazu ausgebildet ist, die Recheneinrichtung in einem Resetzustand (Rücksetzzustand) zu halten, wobei insbesondere das Kryptografiemodul dazu ausgebildet ist, die Recheneinrichtung solange in dem Resetzustand zu halten, bis die Überprüfung abgeschlossen ist. Dadurch wird verhindert, dass die Recheneinrichtung ein mit dem zu überprüfenden Speicherbereich korrespondierendes Computerprogramm ausführt, solange die Überprüfung nicht bereits abgeschlossen worden ist. Während die Recheneinheit in dem Resetzustand gehalten wird, kann sie kein Computerprogramm ausführen. Besonders vorteilhaft kann auch für eine Initialisierung eines das Kryptografiemodul und die Recheneinrichtung aufweisenden Systems ein Zeitablauf derart vorgesehen sein, dass zunächst das Kryptografiemodul aktiviert wird, und dass das Kryptografiemodul direkt nach seiner Aktivierung die Recheneinrichtung in den Resetzustand versetzt, um zu verhindern, dass ggf. nicht bereits geprüfte Software aus einem Speicherbereich durch die Recheneinrichtung ausgeführt wird.

Bei weiteren bevorzugten Ausführungsformen ist vorgesehen, dass das Kryptografiemodul dazu ausgebildet ist, im Rahmen der Überprüfung festzustellen, ob ein Inhalt des wenigstens einen Speicherbereichs einem vorgebbaren Speicherinhalt entspricht, und den Resetzustand für die Recheneinrichtung zu beenden, wenn die Überprüfung ergeben hat, dass der Inhalt des wenigstens einen Speicherbereichs dem vorgebbaren Speicherinhalt entspricht. Dann kann davon ausgegangen werden, dass der Inhalt des wenigstens einen Speicherbereichs ordnungsgemäß, also insbesondere nicht manipuliert, ist.

Bei weiteren bevorzugten Ausführungsformen ist vorgesehen, dass das Kryptografiemodul dazu ausgebildet ist, dann, wenn die Überprüfung ergeben hat, dass der Inhalt des wenigstens einen Speicherbereichs nicht dem vorgebbaren Speicherinhalt entspricht, die Recheneinrichtung weiter in dem Resetzustand zu halten. Die Überprüfung, ob ein Inhalt des wenigstens einen Speicherbereichs einem vorgebbaren Speicherinhalt entspricht, kann bei weiteren bevorzugten Ausführungsformen wiederum durch Bildung eines CMAC-Werts in Abhängigkeit des tatsächlichen Speicherinhalts und Vergleich des so erhaltenen CMAC-Werts mit einem Referenz-CMAC-Wert ausgeführt werden.

Bei weiteren bevorzugten Ausführungsformen ist vorgesehen, dass der wenigstens eine Speicherbereich wenigstens ein zur Ausführung auf der Recheneinrichtung vorgesehenes Computerprogramm, insbesondere einen Bootloader bzw. Bootmanager, für die Recheneinrichtung, aufweist. Dadurch kann vorteilhaft bereits der Bootloader durch das Kryptografiemodul überprüft werden, also dasjenige Computerprogramm für die Recheneinrichtung, welches bei einer Initialisierung der Recheneinrichtung i.d.R. als erstes Programm ausgeführt wird und beispielsweise steuert, welche (weiteren) Computerprogramme durch die Recheneinrichtung gestartet bzw. ausgeführt werden. Hierdurch ist vorteilhaft gewährleistet, dass direkt nach einer Initialisierung der Recheneinrichtung nur zuvor durch das Kryptografiemodul überprüfte Computerprogramme durch die Recheneinrichtung ausgeführt werden bzw. zumindest der Bootloader nicht manipuliert ist.

Bei weiteren bevorzugten Ausführungsformen kann die vorstehend beschriebene Überprüfung auch für andere Speicherinhalte bzw. Computerprogramme ausgeführt werden als den genannten Bootloader, beispielsweise für solche Computerprogramme, welche nach dem Startvorgang (Booten) der Recheneinrichtung ausgeführt werden sollen. Hierbei ergeben sich entsprechende Vorteile für den weiteren Betrieb der Recheneinrichtung. Insbesondere kann hierdurch verhindert werden, dass kompromittierte Computerprogramme durch die Recheneinrichtung ausgeführt werden. Besonders vorteilhaft kann dadurch auch sichergestellt werden, dass z.B. eine kryptografisch abzusichernde Kommunikation, die die Recheneinrichtung ausführen soll, beispielsweise zum Datenaustausch mit anderen Komponenten, nicht von vornherein (z.B. ab Systemstart) kompromittiert werden kann, beispielsweise durch das Einschleusen manipulierter Computerprogramme, die ggf. zu verarbeitende (geheime) kryptografische Schlüssel missbrauchen oder an nicht autorisierte Empfänger übertragen. Welche weiteren Speicherinhalte bzw. Computerprogramme durch das Kryptografiemodul überprüft werden sollen, kann die Recheneinrichtung bei weiteren vorteilhaften Ausführungsformen dem Kryptografiemodul vorteilhaft, insbesondere dynamisch, mittels dem ersten Steuerbefehl (und oder mittels weiteren, zu dem ersten Steuerbefehl vergleichbaren, Steuerbefehlen) signalisieren.

Bei weiteren bevorzugten Ausführungsformen ist vorgesehen, dass das Kryptografiemodul dazu ausgebildet ist, der Recheneinrichtung erste Daten, insbesondere kryptografische Schlüssel bereitzustellen, wobei insbesondere das Kryptografiemodul dazu ausgebildet ist, der Recheneinrichtung in Abhängigkeit der Überprüfung die ersten Daten nur teilweise oder gar nicht zur Verfügung zu stellen. Sofern beispielsweise im Rahmen der vorstehend beschriebenen Überprüfung festgestellt worden ist, dass der Inhalt eines überprüften Speicherbereichs den vorgebbaren Werten entspricht (beispielsweise unter Vergleich entsprechender CMAC-Werte), kann darauf geschlossen werden, dass eine nicht manipulierte Originalsoftware vorliegt, und der Recheneinrichtung kann der Zugriff auf die in dem Kryptografiemodul gespeicherten ersten Daten, insbesondere kryptografische Schlüssel, gestattet werden. Sofern jedoch die vorstehend beschriebene Überprüfung ergibt, dass der Inhalt des überprüften Speicherbereichs nicht den vorgebbaren Werten entspricht, die überprüfte Software potenziell also manipuliert worden ist, kann vorgesehen sein, dass das Kryptografiemodul den Zugriff der Recheneinrichtung auf in dem Kryptografiemodul gespeicherte bzw. durch das Kryptografiemodul bereitstellbare kryptografische Schlüssel oder sonstige erste Daten vollständig sperrt, wodurch vorteilhaft verhindert werden kann, dass die Recheneinrichtung unter Steuerung einer manipulierten Software kryptografische Schlüssel aus dem Kryptografiemodul entnimmt. Bei weiteren bevorzugten Ausführungsformen ist auch denkbar, dass in Abhängigkeit des Typs des überprüften Speicherinhalts der Recheneinrichtung ein Zugriff auf eine erste Teilmenge von in dem Kryptografiemodul gespeicherten kryptografischen Schlüsseln freigegeben wird, nicht jedoch ein Zugriff auf eine zweite Teilmenge von kryptografischen Schlüsseln.

Bei weiteren bevorzugten Ausführungsformen ist vorgesehen, dass das Kryptografiemodul zumindest teilweise, insbesondere vollständig, als Hardwareschaltung ausgebildet ist. Bei weiteren Ausführungsformen kann vorgesehen sein, dass das Kryptografiemodul wenigstens einen Rechenkern und/oder einen Arbeitsspeicher (RAM) und/oder einen nichtflüchtigen Speicher (z.B. Flash-EEPROM) und/oder wenigstens eine, vorzugsweise zumindest teilweise, weiter vorzugsweise vollständig als Hardwareschaltung ausgebildete, Kryptografieeinheit aufweist, die beispielsweise zur Ausführung der CMAC-Berechnungen und/oder von Vergleichen mehrerer CMAC-Werte (z.B. ermittelter CMAC-Wert für einen bestimmten Speicherbereich / Referenz-CMAC-Wert) ausgebildet ist.

Vorteilhaft ist
das Kryptografiemodul dazu ausgebildet, einen Bootloader der Recheneinrichtung zu überprüfen (beispielsweise mittels CMAC-Berechnung), nach erfolgreicher Überprüfung des Bootloaders eine Ausführung des Bootloaders freizugeben (z.B. durch Entlassen der Recheneinrichtung aus einem Resetzustand), und, bevorzugt insbesondere nach Freigabe des Bootloaders, auf den ersten Steuerbefehl zu warten, der z.B. unter Steuerung des Bootloaders ausgebbar ist. Dadurch ist vorteilhaft sichergestellt, dass sowohl der Bootloader der Recheneinrichtung dem Prinzip der Ausführungsformen folgend überprüft werden kann (insbesondere ohne, dass hierzu ein erster Steuerbefehl von der nicht bereits aktiv arbeitenden Recheneinrichtung erforderlich wäre), als auch ein oder mehrere andere Computerprogramme für die Recheneinrichtung, wobei die Recheneinrichtung nach erfolgreicher Überprüfung ihres Bootloaders vorteilhaft mittels des ersten Steuerbefehls selbst festlegen kann, welche (weiteren) Speicherbereiche bzw. Computerprogramme (zusätzlich zu dem bereits überprüften Bootloader) durch das Kryptografiemodul zu überprüfen sind.

Weitere bevorzugte Ausführungsformen beziehen sich auf ein Verfahren zum Betreiben eines Kryptografiemoduls zur zumindest zeitweisen Steuerung eines Betriebs wenigstens einer Recheneinrichtung gemäß Anspruch 10, wobei u.a. das Kryptografiemodul wenigstens einen Speicherbereich einer Speichereinrichtung, auf die die Recheneinrichtung zugreifen kann, überprüft und den Betrieb der wenigstens einen Recheneinrichtung in Abhängigkeit der Überprüfung steuert, wobei das Kryptografiemodul von der Recheneinrichtung einen ersten Steuerbefehl empfängt, der wenigstens einen zu überprüfenden Speicherbereich der Speichereinrichtung charakterisiert, und den durch den ersten Steuerbefehl charakterisierten Speicherbereich überprüft.

Weitere bevorzugte Ausführungsformen beziehen sich auf eine Recheneinrichtung mit wenigstens einem Kryptografiemodul gemäß den Ausführungsformen, wobei die Recheneinrichtung u.a. dazu ausgebildet ist, einen ersten Steuerbefehl an das wenigstens eine Kryptografiemodul zu senden, wobei der erste Steuerbefehl wenigstens einen zu überprüfenden Speicherbereich der Speichereinrichtung charakterisiert. Dadurch kann die Recheneinrichtung vorteilhaft dem Kryptografiemodul, insbesondere dynamisch, mitteilen, welcher Speicherbereich bzw. welche Speicherbereich im Sinne des Prinzips der Ausführungsformen durch das Kryptografiemodul zu überprüfen sind.

Bei weiteren bevorzugten Ausführungsformen ist vorgesehen, dass die Recheneinrichtung dazu ausgebildet ist, einen zweiten Steuerbefehl von dem wenigstens einen Kryptografiemodul zu empfangen, wobei der zweite Steuerbefehl eine erfolgreiche Überprüfung des zu überprüfenden Speicherbereichs der Speichereinrichtung signalisiert, wobei insbesondere die Recheneinrichtung dazu ausgebildet ist, nach Empfang des zweiten Steuerbefehls wenigstens ein Computerprogramm auszuführen, das mit dem zu überprüfenden Speicherbereich assoziiert ist, insbesondere das zumindest teilweise, vorzugsweise vollständig, in dem zu überprüfenden Speicherbereich liegt.

Weitere bevorzugte Ausführungsformen beziehen sich auf ein SoC mit einer Recheneinrichtung und wenigstens einem Kryptografiemodul gemäß den Ausführungsformen.

Weitere vorteilhafte Ausführungsformen sind Gegenstand der Unteransprüche.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Ansprüchen oder deren Rückbeziehung sowie unabhängig von ihrer Formulierung bzw. Darstellung in der Beschreibung bzw. in der Zeichnung.

In der Zeichnung zeigt:
- Figur 1: schematisch ein vereinfachtes Blockdiagramm eines Kryptografiemoduls gemäß einer Ausführungsform,
- Figur 2: schematisch ein vereinfachtes Blockdiagramm eines Kryptografiemoduls gemäß einer weiteren Ausführungsform,
- Figur 3: schematisch ein vereinfachtes Flussdiagramm eines Verfahrens gemäß einer Ausführungsform,
- Figur 4: schematisch ein vereinfachtes Flussdiagramm eines Verfahrens gemäß einer weiteren Ausführungsform,
- Figur 5: schematisch ein vereinfachtes Blockdiagramm einer weiteren Ausführungsform,
- Figur 6: schematisch ein vereinfachtes Blockdiagramm eines Kryptografiemoduls gemäß einer weiteren Ausführungsform,
- Figur 7: schematisch ein vereinfachtes Flussdiagramm eines Verfahrens gemäß einer weiteren Ausführungsform, und
- Figur 8: schematisch eine Datenstruktur gemäß einer Ausführungsform.

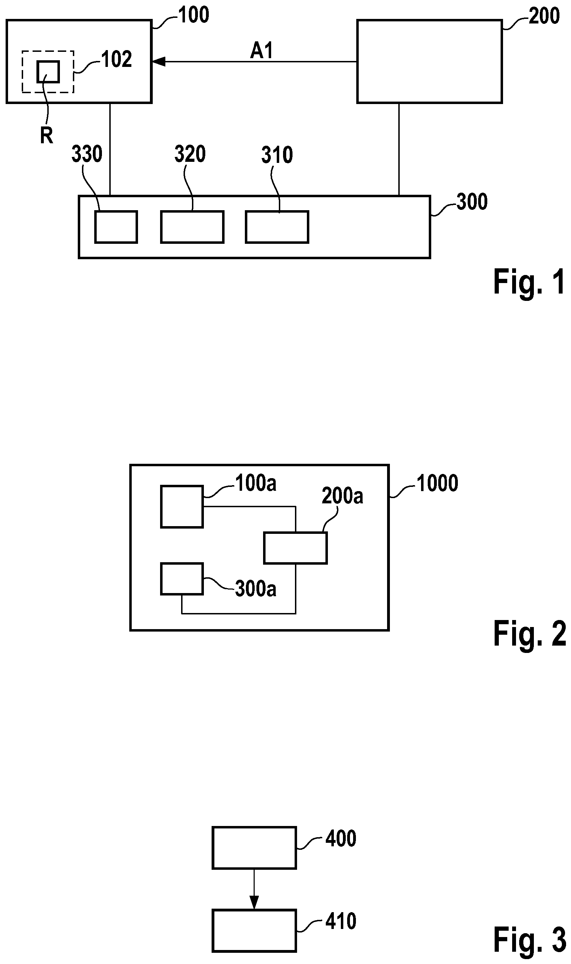

Figur 1 zeigt schematisch ein vereinfachtes Blockdiagramm eines Kryptografiemoduls 100 gemäß einer Ausführungsform. Das Kryptografiemodul 100 ist zur zumindest zeitweisen Steuerung eines Betriebs wenigstens einer Recheneinrichtung 200 vorgesehen. Das Kryptografiemodul 100 ist insbesondere dazu ausgebildet, wenigstens einen Speicherbereich 310, 320, 330 einer Speichereinrichtung 300, auf die die Recheneinrichtung 200 zugreifen kann, zu überprüfen und den Betrieb der wenigstens einen Recheneinrichtung 200 in Abhängigkeit der Überprüfung zu steuern, wobei das Kryptografiemodul 100 dazu ausgebildet ist, von der Recheneinrichtung 200 einen ersten Steuerbefehl A1 zu empfangen, der wenigstens einen zu überprüfenden Speicherbereich 310 der Speichereinrichtung 300 charakterisiert, und den durch den ersten Steuerbefehl A1 charakterisierten Speicherbereich zu überprüfen. Dadurch ist vorteilhaft die Möglichkeit gegeben, einen Inhalt des Speicherbereichs beispielsweise auf Abweichungen gegenüber einem vorgebbaren Inhalt hin zu überprüfen. Hierdurch kann vorteilhaft beispielsweise die Ausführung von unsicheren bzw. durch einen Angreifer kompromittierten Computerprogrammen durch die Recheneinrichtung 200 verhindert werden. Weiter vorteilhaft kann dem Kryptografiemodul 100 mittels des ersten Steuerbefehls A1 der zu überprüfende Speicherbereich 310 bzw. die zu überprüfenden Speicherbereiche 310, 320, 330 signalisiert werden (z.B. Adressinformationen, die angeben, welche Speicherblöcke zu überprüfen sind), so dass diese Informationen z.B. nicht vorkonfiguriert werden müssen. Vielmehr kann der zu überprüfende Speicherbereich bzw. können die zu überprüfenden Speicherbereiche dynamisch (z.B. zur Laufzeit des Kryptografiemoduls 100) mittels des ersten Steuerbefehls A1 signalisiert werden, wodurch die Flexibilität weiter gesteigert wird.

Bei bevorzugten Ausführungsformen kann die Speichereinrichtung 300 wie beispielhaft in Figur 1 dargestellt extern zu dem Kryptografiemodul 100 und der Recheneinrichtung 200 angeordnet sein.

Bei weiteren bevorzugten Ausführungsformen ist vorgesehen, dass das Kryptografiemodul 100 dazu ausgebildet ist, die Überprüfung des wenigstens einen Speicherbereichs 310, 320, 330 unter Verwendung eines schlüsselbasierten Nachrichtenauthentifizierungscodes, CMAC, auszuführen. Dadurch ist eine besonders effiziente Überprüfung ermöglicht. Eine Internetpublikation, die sich auf eine beispielhafte Ausgestaltung des CMAC-Verfahrens bezieht, ist beispielsweise unter https://doi.org/10.6028%2Fnist.sp.800-38b abrufbar ("NIST Special Publication 800-38B Recommendation for Block Cipher Modes of Operation: The CMAC Mode for Authentication").

Bei weiteren bevorzugten Ausführungsformen ist vorgesehen, dass das Kryptografiemodul 100 eine optionale, vorzugsweise in das Kryptografiemodul 100 integrierte, Speichereinheit 102 zur Speicherung wenigstens eines Referenzwerts R und/oder eines Referenzlayouts für den wenigstens einen Speicherbereich 310, 320, 330 (oder, bei weiteren Ausführungsformen, für die gesamte Speichereinrichtung 300) aufweist. Bevorzugt kann die Recheneinrichtung 200 oder eine sonstige Komponente, die von dem Kryptografiemodul 100 verschieden ist, nicht, auf die Speichereinheit 102 zugreifen.

Bei weiteren bevorzugten Ausführungsformen kann der Referenzwert R beispielsweise einen CMAC-Wert für einen vorgebbaren Speicherinhalt repräsentieren, der beispielsweise mit einem CMAC-Wert vergleichbar ist, der bei der Überprüfung des wenigstens einen Speicherbereichs 310, 320, 330 durch das Kryptografiemodul 100 ermittelt worden ist. Sofern der ermittelte CMAC-Wert von dem Referenzwert R abweicht, kann auf eine unzulässige Veränderung des Speicherinhalts des überprüften Speicherbereichs 310, 320, 330 geschlossen werden.

Mit anderen Worten ist bei bevorzugten Ausführungsformen vorgesehen, dass das Kryptografiemodul 100 dazu ausgebildet ist, die Überprüfung in Abhängigkeit des Referenzwerts R auszuführen. Bei diesen Ausführungsformen umfasst die Überprüfung beispielsweise die Bildung eines CMAC-Werts in Abhängigkeit des Speicherinhalts des wenigstens einen Speicherbereichs 310, 320, 330 und einen Vergleich des so gebildeten CMAC-Werts mit dem Referenzwert R, wie er beispielsweise in der Speichereinheit 102 des Kryptografiemoduls 100 hinterlegt ist. Vorteilhaft kann in der Speichereinheit 102 des Kryptografiemoduls 100 für jeden zu überprüfenden Speicherbereich 310, 320, 330 ein entsprechender Referenzwert, beispielsweise CMAC-Wert, hinterlegt sein.

Bei weiteren bevorzugten Ausführungsformen kann das Referenzlayout, das ebenfalls in der Speichereinheit 102 des Kryptografiemoduls 100 gespeichert sein kann, ein oder mehrere der folgenden Informationen enthalten: a) Anzahl der Speicherbereiche 310, 320, 330 in der Speichereinrichtung 300, auf die die Recheneinrichtung 200 zugreifen kann, b) Adressbereich der betreffenden Speicherbereiche 310, 320, 330, c) Länge der betreffenden Speicherbereiche 310, 320, 330, d) wenigstens einen Referenzwert (beispielsweise einen CMAC-Wert) des betreffenden Speicherbereichs 310, 320, 330, e) Daten betreffend eine kryptografische Signatur, beispielsweise eine Signaturadresse und/oder einen Signaturtyp und/oder eine Signatur-Referenz auf ein übergeordnetes Zertifikat. Besonders bevorzugt umfasst das Referenzlayout bei weiteren Ausführungsformen wenigstens manche der o.g. Daten (z.B. Referenzwert und Speicherbereich) für einen Bootloader der Recheneinrichtung 200, so dass das Kryptografiemodul 100 sogar den Bootloader der Recheneinrichtung 200 überprüfen kann.

Bei weiteren bevorzugten Ausführungsformen kann das Kryptografiemodul 100 die vorstehend genannten Referenzwerte R bzw. das Referenzlayout nutzen, um die Art und den Umfang einer Überprüfung wenigstens eines Speicherbereichs 310, 320, 330 festzulegen.

Alternativ oder ergänzend können der Referenzwert R bzw. das Referenzlayout (oder weitere Steuerinformationen, die den Referenzwert R und/oder das Referenzlayout charakterisieren) bei weiteren bevorzugten Ausführungsformen mittels des ersten Steuerbefehls A1 an das Kryptografiemodul gesendet werden. Dies kann bei weiteren Ausführungsformen beispielsweise unter Steuerung des Bootloaders erfolgen. Bei weiteren Ausführungsformen kann daher auch - zumindest für manche potentiell zu überprüfende Speicherbereiche - eine, insbesondere über eine zeitweise Zwischenspeicherung hinausgehende, Speicherung des Referenzwerts R bzw. des Referenzlayouts in dem Kryptografiemodul 100 entfallen.

Figur 2 zeigt schematisch ein vereinfachtes Blockdiagramm einer weiteren Ausführungsform. Dargestellt ist ein Ein-Chip-System (englisch: SoC) 1000 mit einer integrierten Recheneinrichtung 200a und einem integrierten Kryptografiemodul 100a, dass beispielsweise die vorstehend unter Bezugnahme auf Figur 1 beschriebene Funktionalität aufweist. Das Ein-Chip-System 1000 weist ferner eine integrierte Speichereinrichtung 300a auf, auf die die Recheneinrichtung 200a zugreifen kann. Insbesondere sind in entsprechenden Speicherbereichen (nicht gezeigt) der Speichereinrichtung 300a zur Ausführung durch die Recheneinrichtung 200a vorgesehene Computerprogramme bzw. Module gespeichert und durch das integrierte Kryptografiemodul 100a gemäß den Ausführungsformen überprüfbar.

Figur 3 zeigt ein vereinfachtes Flussdiagramm eines Verfahrens gemäß einer Ausführungsform. In Schritt 400 überprüft das Kryptografiemodul 100 (Figur 1) wenigstens einen Speicherbereich 310, 320, 330 der Speichereinrichtung 300, und in dem nachfolgenden Schritt 410 steuert das Kryptografiemodul 100 den Betrieb der Recheneinrichtung 200 in Abhängigkeit der Überprüfung 400.

Bei weiteren bevorzugten Ausführungsformen ist vorgesehen, dass das Kryptografiemodul 100 (Fig. 1) dazu ausgebildet ist, die Recheneinrichtung 200 in einem Resetzustand zu halten, wobei insbesondere das Kryptografiemodul 100 dazu ausgebildet ist, die Recheneinrichtung 200 solange in dem Resetzustand zu halten, bis die Überprüfung abgeschlossen ist. Dadurch wird verhindert, dass die Recheneinrichtung 200 ein mit dem zu überprüfenden Speicherbereich 310, 320, 330 korrespondierendes Computerprogramm ausführt, solange die Überprüfung nicht bereits abgeschlossen worden ist. Während die Recheneinheit 200 in dem Resetzustand gehalten wird, kann sie kein Computerprogramm ausführen.

Bei weiteren bevorzugten Ausführungsformen ist vorgesehen, dass das Kryptografiemodul 100 dazu ausgebildet ist, im Rahmen der Überprüfung festzustellen, ob ein Inhalt des wenigstens einen Speicherbereichs 310, 320, 330 einem vorgebbaren Speicherinhalt entspricht, und den Resetzustand für die Recheneinrichtung 200 zu beenden, wenn die Überprüfung ergeben hat, dass der Inhalt des wenigstens einen Speicherbereichs dem vorgebbaren Speicherinhalt entspricht.

Besonders bevorzugt ist das Kryptografiemodul 100 dazu ausgebildet, dann, wenn die Überprüfung ergeben hat, dass der Inhalt des wenigstens einen Speicherbereichs nicht dem vorgebbaren Speicherinhalt entspricht, die Recheneinrichtung 200 weiter in dem Resetzustand zu halten. Die Überprüfung, ob ein Inhalt des wenigstens einen Speicherbereichs einem vorgebbaren Speicherinhalt entspricht, kann bei weiteren bevorzugten Ausführungsformen wiederum durch Bildung eines CMAC-Werts in Abhängigkeit des tatsächlichen Speicherinhalts und Vergleich des so erhaltenen CMAC-Werts mit einem Referenz-CMAC-Wert ausgeführt werden.

Bei weiteren bevorzugten Ausführungsformen ist vorgesehen, dass der wenigstens eine Speicherbereich wenigstens ein zur Ausführung auf der Recheneinrichtung vorgesehenes Computerprogramm, insbesondere einen Bootloader für die Recheneinrichtung, aufweist. Dadurch kann vorteilhaft bereits der Bootloader, also dasjenige Computerprogramm für die Recheneinrichtung, durch das Kryptografiemodul 100 überprüft werden, welches bei einer Initialisierung der Recheneinrichtung 200 als erstes Programm ausgeführt wird. Hierdurch ist vorteilhaft gewährleistet, dass direkt nach einer Initialisierung der Recheneinrichtung nur zuvor durch das Kryptografiemodul überprüfte Computerprogramme durch die Recheneinrichtung ausgeführt werden.

Bei weiteren bevorzugten Ausführungsformen kann die vorstehend beschriebene Überprüfung auch für andere Speicherinhalte bzw. Computerprogramme ausgeführt werden als den genannten Bootloader, beispielsweise auf solche Computerprogramme, welche nach dem Startvorgang (booten) der Recheneinrichtung ausgeführt werden sollen. Hierbei ergeben sich entsprechende Vorteile für den weiteren Betrieb der Recheneinrichtung. Insbesondere kann hierdurch verhindert werden, dass kompromittierter Computerprogramme durch die Recheneinrichtung ausgeführt werden.

Bei weiteren bevorzugten Ausführungsformen ist vorgesehen, dass das Kryptografiemodul 100 dazu ausgebildet ist, der Recheneinrichtung 200 erste Daten, insbesondere kryptografische Schlüssel bereitzustellen, wobei insbesondere das Kryptografiemodul 100 dazu ausgebildet ist, der Recheneinrichtung 200 in Abhängigkeit der Überprüfung 400 (Fig. 3) die ersten Daten nur teilweise oder gar nicht zur Verfügung zu stellen. Sofern beispielsweise im Rahmen der vorstehend beschriebenen Überprüfung 400 festgestellt worden ist, dass der Inhalt eines überprüften Speicherbereichs 310 (Fig. 1) den vorgebbaren Werten entspricht (beispielsweise unter Vergleich entsprechender CMAC-Werte), kann darauf geschlossen werden, dass eine nicht manipulierte Originalsoftware vorliegt, und der Recheneinrichtung 200 kann der Zugriff auf die in dem Kryptografiemodul 100 gespeicherten ersten Daten, insbesondere kryptografische Schlüssel, gestattet werden. Die Recheneinrichtung 200 kann die von dem Kryptografiemodul erhaltenen kryptografischen Schlüssel beispielsweise dazu verwenden, eine Kommunikation mit anderen Einheiten, z.B. anderen Recheneinheiten (nicht gezeigt), kryptografisch abzusichern, beispielsweise durch eine Verschlüsselung der Nachrichten und/oder Bildung von CMAC-Werten für die Nachrichten.

Sofern jedoch die vorstehend beschriebene Überprüfung ergibt, dass der Inhalt des überprüften Speicherbereichs nicht den vorgebbaren Werten entspricht, potenziell also manipuliert worden ist, kann vorgesehen sein, dass das Kryptografiemodul 100 den Zugriff der Recheneinrichtung 200 auf in dem Kryptografiemodul gespeicherte bzw. durch das Kryptografiemodul bereitstellbare kryptografische Schlüssel oder sonstige erste Daten vollständig sperrt, wodurch vorteilhaft verhindert werden kann, dass die Recheneinrichtung unter Steuerung einer manipulierten Software kryptografische Schlüssel aus dem Kryptografiemodul entnimmt. Bei weiteren bevorzugten Ausführungsformen ist auch denkbar, dass in Abhängigkeit des Typs des überprüften Speicherinhalts der Recheneinrichtung (z.B. Bootloader oder reguläre Software, die erst nach der Ausführung des Bootloaders ausgeführt werden soll) ein Zugriff auf eine erste Teilmenge von in dem Kryptografiemodul gespeicherten kryptografischen Schlüsseln freigegeben wird, nicht jedoch auf eine zweite Teilmenge von kryptografischen Schlüsseln.

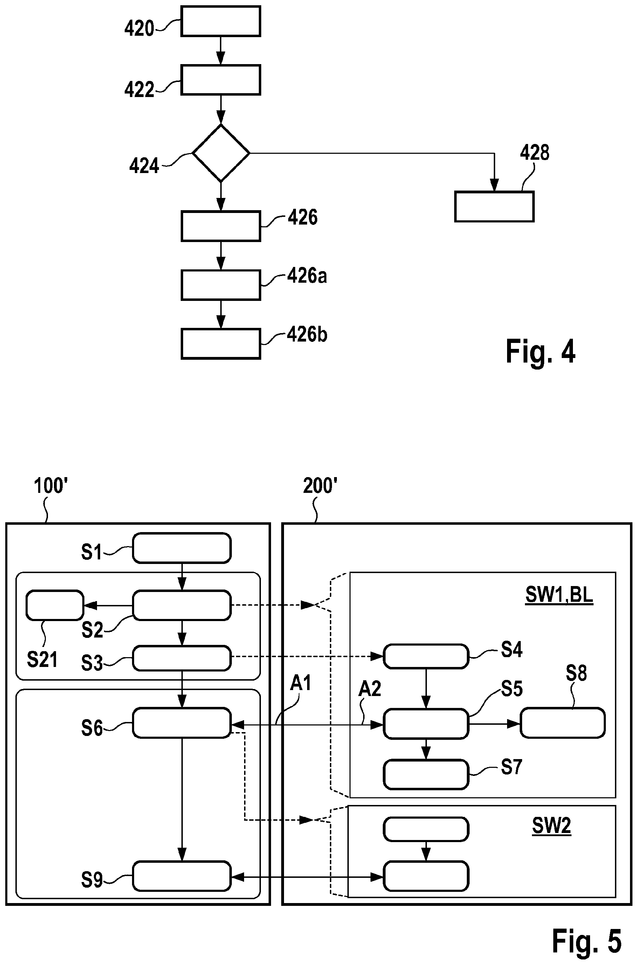

Figur 4 zeigt ein vereinfachtes Flussdiagramm eines Verfahrens gemäß einer weiteren Ausführungsform. In Schritt 420 erfolgt eine Initialisierung des Kryptografiemoduls 100 (Fig. 1). Hierbei kann beispielsweise ein optional in der Speichereinheit 102 gespeichertes Referenzlayout bzw. können Teile hiervon und/oder Konfigurationsdaten für das Kryptografiemodul 100 gelesen und ausgewertet werden. Optional kann auch die Recheneinrichtung 200 in dem Schritt 420 in ihren Resetzustand versetzt und bis auf weiteres in dem Resetzustand gehalten werden. In Schritt 422 (Fig. 4) wird sodann wenigstens ein Speicherbereich 310 (Figur 1) der Speichereinrichtung 300 überprüft, in dem beispielsweise ein Bootloader-Programm für die Recheneinrichtung 200 gespeichert ist. Das Überprüfen aus Schritt 422 hat beispielsweise die Bildung eines CMAC-Werts für das Bootloader-Programm zum Gegenstand. Der hierbei ermittelte CMAC-Wert wird sodann in Schritt 424 mit einem für den Bootloader zuvor ermittelten und gespeicherten Referenzwert verglichen, der beispielsweise durch das Kryptografiemodul 100 aus der Speichereinheit 102 ladbar ist.

Sofern der Vergleich 424 ergibt, dass der bei dem Überprüfen in Schritt 422 gebildete CMAC-Wert für das momentan in dem Speicherbereich 310 gespeicherte Bootloader-Programm mit dem zuvor (beispielsweise bei der Herstellung des Kryptografiemoduls 100 und/oder einer Parametrierung des Kryptografiemoduls 100 in einer kryptografisch sicheren Umgebung) ermittelten und in der Speichereinheit 102 abgelegten CMAC-Referenzwert übereinstimmt, kann das Kryptografiemodul 100 den Resetzustand der Recheneinrichtung 200 beenden, vergleiche Schritt 426, woraufhin die Recheneinrichtung 200 ihren regulären Betrieb aufnehmen und das Bootloader-Programm aus dem Speicherbereich 310 ausführen kann.

Sofern der Vergleich 424 jedoch ergibt, dass der bei dem Überprüfen in Schritt 422 gebildete CMAC-Wert für das momentan in dem Speicherbereich 310 gespeicherte Bootloader-Programm mit dem zuvor ermittelten CMAC-Referenzwert nicht übereinstimmt, wird in Schritt 428 verzweigt, in dem die Recheneinrichtung 200 durch das Kryptografiemodul 100 weiterhin in ihrem Reset Zustand gehalten wird, um zu verhindern, dass die Recheneinrichtung 200 den potenziell kompromittierten Bootloader ausführt.

Optional kann in Schritt 426 auch der Zugriff der Recheneinrichtung 200 auf ein oder mehrere durch das Kryptografiemodul 100 bereitstellbare kryptografische Schlüssel freigegeben werden.

Weiter optional kann nach Schritt 426 die Recheneinrichtung den ersten Steuerbefehl A1 (Fig. 1) an das Kryptografiemodul 100 senden, vgl. Schritt 426a (Fig. 4), z.B. um dem Kryptografiemodul 100 anzuzeigen, welcher Speicherbereich bzw. welches Computerprogramm als nächstes durch das Kryptografiemodul 100 überprüft werden soll. Sodann kann ebenfalls optional die entsprechende (weitere) Überprüfung durch das Kryptografiemodul 100 in Abhängigkeit des ersten Steuerbefehls A1 erfolgen, vgl. Schritt 426b.

Figur 5 zeigt schematisch ein vereinfachtes Blockdiagramm einer weiteren Ausführungsform. Der Bereich 100' umfasst i.w. auf Seiten des Kryptografiemoduls 100 ausgeführte Schritte, und der Bereich 200' umfasst i.w. auf Seiten der Recheneinrichtung 200 ausgeführte Schritte. In Schritt S1 wird das Kryptografiemodul 100 aktiviert. Direkt nach seiner Aktivierung hält das Kryptografiemodul 100 die Recheneinrichtung 200 in ihrem Resetzustand. In Schritt S2 überprüft das Kryptografiemodul 100 ein erstes Computerprogramm SW1 für die Recheneinrichtung 200. Bei dem ersten Computerprogramm SW1 kann es sich bevorzugt um einen Bootloader BL für die Recheneinrichtung 200 handeln. Das Überprüfen in Schritt S2 umfasst beispielsweise die Bildung eines CMAC-Werts in Abhängigkeit des ersten Computerprogramms SW1 bzw. eines entsprechenden Speicherinhalts einer das erste Computerprogramm SW1 speichernden Speichereinrichtung und einen Vergleich mit einem Referenz-CMAC-Wert. Die Informationen, welcher Speicherbereich zu prüfen ist, und welcher (z.B. CMAC-) Referenzwert hierfür zu nutzen ist, kann das Kryptografiemodul beispielsweise den in der Speichereinheit 102 gespeicherten Referenzdaten entnehmen.

Sofern das Überprüfen S2 keine Übereinstimmung beider CMAC-Werte ergibt, wird darauf geschlossen, dass das erste Computerprogramm SW1 manipuliert bzw. schadhaft ist, und es wird in Schritt S21 verzweigt, in dem die Recheneinrichtung 200 beispielsweise deaktiviert wird. Sofern das Überprüfen S2 eine Übereinstimmung beider CMAC-Werte ergibt, kann darauf geschlossen werden, dass das erste Computerprogramm SW1 unversehrt ist und durch die Recheneinrichtung 200 ausgeführt werden darf. In diesem Fall wird aus Schritt S2 in dem Schritt S3 verzweigt, in dem die Recheneinrichtung 200 freigegeben wird, also aus dem herbeigeführten bzw. zuvor aufrechterhaltenen Resetzustand entlassen wird. Sodann kann die Recheneinrichtung 200 das erste Computerprogramm SW1 ausführen, vorliegend mithin den Bootloader starten, vergleiche Schritt S4.

Bei weiteren bevorzugten Ausführungsformen kann die Recheneinrichtung 200, beispielsweise unter Steuerung des Bootloaders SW1, den vorstehend unter Bezugnahme auf Fig. 1 bereits beschriebenen ersten Steuerbefehl A1 an das Kryptografiemodul 100 senden, vergleiche Schritt S5, wobei der erste Steuerbefehl A1 wenigstens einen (weiteren) zu überprüfenden Speicherbereich der Speichereinrichtung 300 bzw. ein entsprechendes Computerprogramm SW2 charakterisiert, beispielsweise die betreffenden Adressen in der Speichereinrichtung bzw. einen Adressbereich angibt.

Vorliegend wird beispielhaft davon ausgegangen, dass in einem zweiten Speicherbereich 320 einer Speichereinrichtung ein zweites Computerprogramm SW2 für die Recheneinrichtung 200 vorgesehen ist, welches Gegenstand der nächsten Überprüfung durch das Kryptografiemodul 100 sein soll. Dementsprechend sendet die Recheneinrichtung 200 den genannten ersten Steuerbefehl A1 an das Kryptografiemodul 100, und das Kryptografiemodul 100 führt eine Überprüfung des zweiten Computerprogramms SW2 in Schritt S6 aus. Die Überprüfung gemäß Schritt S6 kann bevorzugt beispielsweise analog zu der Überprüfung gemäß Schritt S2 erfolgen. Einen entsprechenden CMAC-Referenzwert für das zweite Computerprogramm SW zwei kann das Kryptografiemodul 100 wiederum aus der internen Speichereinheit 102 auslesen. Alternativ oder ergänzend kann der entsprechende CMAC-Referenzwert für das zweite Computerprogramm SW auch mittels des ersten Steuerbefehl A1 von dem Bootloader BL an das Kryptografiemodul gesendet werden.

Sofern die Überprüfung gemäß Schritt S6 ergeben hat, dass das zweite Computerprogramm SW2 unversehrt ist, kann das Kryptografiemodul 100 dies der Recheneinrichtung 200 mittels eines zweiten Steuerbefehls A2 signalisieren. Bei Empfang des zweiten Steuerbefehls A2 geht die Recheneinrichtung 200 dementsprechend zu dem nächsten Schritt S7 über, der beispielsweise die Ausführung des zweiten Computerprogramms SW2 zum Gegenstand hat. Sofern die Überprüfung gemäß Schritt S6 jedoch ergeben hat, dass das zweite Computerprogramm SW2 nicht unversehrt ist, teilt das Kryptografiemodul 100 dies der Recheneinrichtung 200 ebenfalls mittels des zweiten Steuerbefehls A2 mit (alternativ kann die Übermittlung des zweiten Steuerbefehls A2 ausgelassen werden, und nach Ablauf einer vorgebbaren Wartezeit ohne Empfang des zweiten Steuerbefehls A2 von dem Kryptografiemodul kann die Recheneinrichtung 200 darauf schließen, dass die Überprüfung nicht erfolgreich war). In diesem Fall geht die Recheneinrichtung 200 nach Empfang des zweiten Steuerbefehls A2 (bzw. Zeitablauf ohne Empfang des zweiten Steuerbefehls A2) in den Schritt S8 über, der die Einleitung einer Fehlerreaktion zur Folge hat. Die Fehlerreaktion gemäß Schritt S8 kann beispielsweise ein Deaktivieren bzw. löschen des zweiten Computerprogramms SW2 zum Gegenstand haben.

Bei weiteren bevorzugten Ausführungsformen kann das Verfahren durch die Überprüfung weiterer Computerprogramme bzw. entsprechender Speicherbereiche mittels des Kryptografiemoduls 100 fortgeführt werden, vergleiche Schritt S9.

Bei weiteren bevorzugten Ausführungsformen kann das Kryptografiemodul 100 ein Protokoll bzw. Logfile über erfolgreiche und/oder nicht erfolgreiche Überprüfungen führen. Beispielsweise kann das Kryptografiemodul 100 einen Fehlereintrag speichern, wenn eine Überprüfung eines Speicherbereichs 310, 320, 330 bzw. einer darin enthaltenen Software fehlgeschlagen ist (z.B. erkannt an einer Abweichung des ermittelten CMAC-Werts von dem Referenz-CMAC-Wert). Bei weiteren Ausführungsformen kann, z.B. bei einem nachfolgenden Start des Kryptografiemoduls und/oder der Recheneinrichtung das Protokoll bzw. Logfile bzw. Teile hiervon ausgewertet werden und ein weiterer Betrieb der Recheneinrichtung 200 in Abhängigkeit dieser Auswertung gesteuert werden. Beispielsweise kann bei manchen Ausführungsformen ein neuerlicher Bootvorgang (Ausführen des Bootloaders BL) verhindert werden, wenn zuvor eine Überprüfung fehlgeschlagen ist. Alternativ oder ergänzend kann wenigstens eine Unterbrechungsanforderung ("interrupt") erzeugt werden, und/oder die Recheneinrichtung 200 wird zurückgesetzt ("reset").

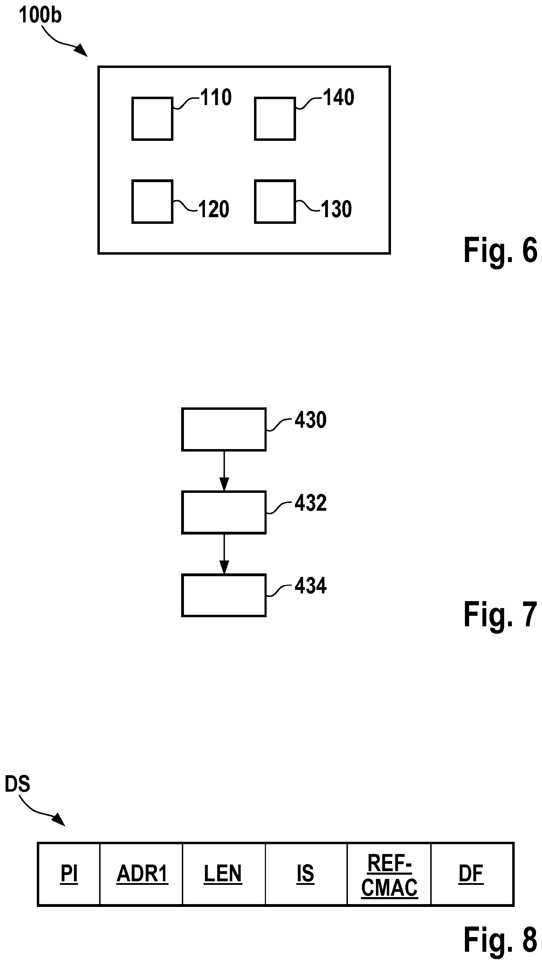

Figur 6 zeigt schematisch ein vereinfachtes Blockdiagramm eines Kryptografiemoduls 100b gemäß einer weiteren Ausführungsform. Das Kryptografiemodul 100b weist einen Rechenkern bzw. Prozessor 110 auf, einen Arbeitsspeicher 120, einen nichtflüchtigen Speicher 130 (beispielsweise Flash-EEPROM), und optional eine Kryptografieeinheit 140, die zur Ausführung von ein oder mehreren kryptografischen Algorithmen oder wenigstens Teilen hiervon ausgebildet ist. Beispielsweise kann die Kryptografieeinheit 140 dazu ausgebildet sein, die vorstehend beschriebene Ermittlung von CMAC-Werten auszuführen.

Das Prinzip gemäß den Ausführungsformen ermöglicht vorteilhaft eine gezielte Überprüfung von beispielsweise für die Recheneinrichtung 200 vorgesehenen Computerprogrammen hinsichtlich ihrer Authentizität bzw. Unversehrtheit mittels kryptografischer Verfahren, beispielsweise durch die vorstehend beschriebene Ermittlung von CMAC-Werten und den Vergleich mit Referenzwerten. Dadurch kann besonders effizient ermittelt werden, ob beispielsweise ein Bootloader für die Recheneinrichtung 200 sicher ist, oder ob er gegebenenfalls durch einen Angreifer manipuliert worden ist (oder ob er durch einen Fehler unbeabsichtigt modifiziert worden ist). In diesem Fall stimmt der in Abhängigkeit des tatsächlichen Speicherbereichs, der den Bootloader aufnimmt, berechnete CMAC-Wert nicht mit dem dem Kryptografiemodul 100 bekannten Referenzwert überein.

Ein weiterer Vorteil des Prinzips gemäß den Ausführungsformen besteht darin, dass eine vergleichsweise feingranulare Überprüfung von Computerprogrammen SW1, SW2 für die Recheneinrichtung 200 auf ihre Sicherheit bzw. Echtheit hin ermöglicht ist, sodass auch einzelne Computerprogramme selektiv durch das Kryptografiemodul überprüft werden können. Besonders vorteilhaft ermöglicht beispielsweise die selektive Überprüfung eines Bootloaders für die Recheneinrichtung 200 ein schnelles Versetzen der Recheneinrichtung 200 in einen sicher bootfähigen Zustand. Eine gegebenenfalls ebenfalls erforderliche bzw. erwünschte Überprüfung weiterer Computerprogramme SW2 kann vorteilhaft beispielsweise zumindest zeitweise parallel zu dem Hochfahren der Recheneinrichtung 200 unter Kontrolle des Bootloaders SW1 oder zu einem späteren Zeitpunkt, vorteilhaft insbesondere dynamisch ausgelöst durch den ersten Steuerbefehl A1, erfolgen. Mit anderen Worten muss unter Anwendung des Prinzips gemäß den Ausführungsformen nicht stets der gesamte Speicher der Speichereinrichtung 300 auf einmal überprüft werden, sondern es können einzelne Speicherbereiche 310, 320, 330 zu vorgebbaren Zeitpunkten flexibel durch das Kryptografiemodul 100 überprüft werden.

Figur 7 zeigt schematisch ein vereinfachtes Flussdiagramm eines Verfahrens gemäß einer weiteren Ausführungsform. In Schritt 430 überprüft das Kryptografiemodul 100 (Fig. 1) einen Bootloader BL (Fig. 5) der Recheneinrichtung 200, beispielsweise mittels CMAC-Berechnung vergleichbar zu Schritt S2 gemäß Fig. 4. Nach erfolgreicher Überprüfung des Bootloaders BL gibt das Kryptografiemodul 100 eine Ausführung des Bootloaders BL frei, vgl. Schritt 432, beispielsweise dadurch, dass ein Resetzustand der Recheneinrichtung 200 durch das Kryptografiemodul nicht länger aufrechterhalten wird, und in Schritt 434 wartet das Kryptografiemodul 100 auf den ersten Steuerbefehl A1, vgl. auch Fig. 4.

Figur 8 zeigt schematisch eine Datenstruktur DS gemäß weiterer bevorzugter Ausführungsformen. Die Datenstruktur DS kann optional beispielsweise dazu verwendet werden, CMAC-Referenzwerte bzw. ein Referenzlayout oder dergleichen für das Kryptografiemodul 100, beispielsweise in der Speichereinheit 102 des Kryptografiemoduls 100, zu speichern. Bei bevorzugten Ausführungsformen weist die Datenstruktur DS einen Primärindex Pl auf, der eine eindeutige Identifikation bereitstellt. Sofern beispielsweise mehrere Datenstrukturen bzw. Datensätze mit der Datenstruktur DS vorhanden sind, können diese unter Nutzung entsprechender Werte für den Primärindex PI voneinander unterschieden werden. Es ist vorstellbar, dass bei mehreren durch ein Kryptografiemodul 100 verwalteten Datenstrukturen bzw. die abgebildete Datenstruktur DS aufweisenden Datensätzen für jeden Datensatz ein eindeutiger Wert für den genannten Primärindex PI vergeben wird.

Weiter bevorzugt kann die Datenstruktur DS eine Startadresse ADR1 aufweisen, die beispielsweise eine Speicheradresse, insbesondere Startadresse, eines gegebenenfalls zu überprüfenden Speicherbereichs 310 in der Speichereinrichtung 300 (Figur 1) definiert. Beispielsweise kann dies eine Startadresse in der Speichereinrichtung 300 sein, an der ein Computerprogramm wie beispielsweise der vorstehend beschriebene Bootloader abgelegt ist.

Weiter bevorzugt weist die Datenstruktur DS eine Längenangabe LEN auf, die die Länge des betreffenden Speicherbereichs angibt. Weiter bevorzugt weist die Datenstruktur DS ein Statusfeld IS auf, das einen Integritätsstatus des aktuellen Datensatzes angibt (beispielsweise "überprüft" oder "fehlerhaft" oder dergleichen, was zum Beispiel in Abhängigkeit von der Überprüfung gemäß Schritt 400 aus Figur 3 ermittelbar ist). Besonders bevorzugt weist die Datenstruktur DS ferner ein Feld REF-CMAC zur Aufnahme eines CMAC-Referenzwerts auf, wie er beispielsweise zu einem Fertigungszeitpunkt für ein in der Speichereinrichtung 300 gespeichertes Computerprogramm, beispielsweise den Bootloader, ermittelt worden ist. Dieser CMAC-Referenzwert kann fortan durch das Kryptografiemodul 100 zur Überprüfung der Echtheit beziehungsweise Unversehrtheit eines zu dem Zeitpunkt der Überprüfung in der Speichereinrichtung 300 bzw. dem betreffenden Speicherbereich 310 vorhandenen Computerprogramms genutzt werden.

Bei weiteren bevorzugten Ausführungsformen kann die Datenstruktur DS auch noch weitere Datenfelder DF enthalten, beispielsweise zur Aufnahme von Signaturadressen, Signaturtypen und Verweisen auf entsprechende root-Zertifikate und dergleichen.

Das Prinzip gemäß den Ausführungsformen weist die weiteren nachstehend genannten Vorteile auf: a) es können effizient Manipulationen (wie auch fehlerbedingte Änderungen) am Inhalt der Speichereinrichtung 300, beispielsweise Manipulationen von darin gespeicherten Computerprogrammen wie beispielsweise einem Bootloader oder dergleichen, während der Laufzeit des Kryptografiemoduls 100 erkannt werden ("runtime manipulation detection", RTMD), b) das sichere Booten (also Starten) einer Software auf der Recheneinrichtung 200, beispielsweise einer Anwendungssoftware, ist sichergestellt ("trusted boot"), c) auch nachträglich in die Speichereinrichtung 300 gespeicherte Computerprogramme SW2 bzw. sonstige Daten können vorteilhaft nach dem Prinzip gemäß den Ausführungsformen überprüft werden ("secure flashing"), d) ein Zugriff auf gegebenenfalls durch das Kryptografiemodul bereitgestellte kryptografische Schlüssel und andere sensible Informationen ist in Abhängigkeit der Überprüfung gemäß den Ausführungsformen steuerbar ("security access"), e) eine Bootreihenfolge (Reihenfolge der Abarbeitung von Computerprogrammen bei Start der Recheneinheit 200) kann beliebig gewählt werden, ohne dass die Sicherheit beeinträchtigt wird, f) durch den Einsatz des Kryptografiemoduls 100, gegebenenfalls mit einer dedizierten Kryptografieeinheit 140, können leistungsfähige und sichere kryptografische Funktionen bereitgestellt werden, beispielsweise CMAC-Bildung, z.B. basierend auf 128 Bit AES (Advanced Encryption Standard), g) durch die Vorsehung von Referenzlayouts z.B. in Form der Datenstruktur DS nach Fig. 7 kann der Betrieb des Kryptografiemoduls 100 flexibel an unterschiedliche Speicherlayouts und sonstige Konfigurationen der Recheneinrichtung 200 angepasst werden, h) durch die Übermittlung des ersten Steuerbefehls A1 können die zu überprüfenden Speicherbereiche dem Kryptografiemodul dynamisch (z.B. zur Laufzeit des Kryptografiemoduls) signalisiert werden.

Weitere bevorzugte Ausführungsformen beziehen sich auf eine Recheneinrichtung 200 (Fig. 1) mit wenigstens einem bzw. für wenigstens ein Kryptografiemodul 100 gemäß den Ausführungsformen, wobei die Recheneinrichtung 200 dazu ausgebildet ist, einen ersten Steuerbefehl A1 an das wenigstens eine Kryptografiemodul 100 zu senden, wobei der erste Steuerbefehl A1 wenigstens einen zu überprüfenden Speicherbereich 310 der Speichereinrichtung 300 charakterisiert. Dadurch kann die Recheneinrichtung 200 vorteilhaft dem Kryptografiemodul 100, insbesondere dynamisch, mitteilen, welcher Speicherbereich bzw. welche Speicherbereiche (ggf. zusätzlich zu dem optional vorab überprüfbaren Bootloader BL) im Sinne des Prinzips der Ausführungsformen durch das Kryptografiemodul 100 zu überprüfen sind. Das Senden des ersten Steuerbefehls A1 kann bei weiteren bevorzugten Ausführungsformen durch den Bootloader BL (Fig. 5) der Recheneinrichtung 200 ausgeführt werden. Wie bereits erwähnt, kann bei weiteren bevorzugten Ausführungsformen hiervor bereits eine Überprüfung des Bootloaders BL selbst bzw. des ihn enthaltenden Speicherbereichs durch das Kryptografiemodul 100 erfolgt sein.

Bei weiteren bevorzugten Ausführungsformen ist vorgesehen, dass die Recheneinrichtung 200 dazu ausgebildet ist, einen zweiten Steuerbefehl A2 (Fig. 4) von dem wenigstens einen Kryptografiemodul zu empfangen, wobei der zweite Steuerbefehl eine erfolgreiche Überprüfung des zu überprüfenden Speicherbereichs der Speichereinrichtung signalisiert, wobei insbesondere die Recheneinrichtung 200 dazu ausgebildet ist, nach Empfang des zweiten Steuerbefehls A2 wenigstens ein Computerprogramm SW2 auszuführen, das mit dem zu überprüfenden Speicherbereich assoziiert ist, insbesondere das zumindest teilweise, vorzugsweise vollständig, in dem zu überprüfenden Speicherbereich liegt. Mit anderen Worten kann das Kryptografiemodul 100 bei weiteren bevorzugten Ausführungsformen nach einer erfolgreichen Überprüfung des zu überprüfenden Speicherbereichs den zweiten Steuerbefehl A2 an die Recheneinrichtung 200 senden, um die erfolgreiche Überprüfung zu signalisieren.

## Patentansprüche

1. Kryptografiemodul (100; 100a; 100b) zur zumindest zeitweisen Steuerung eines Betriebs wenigstens einer Recheneinrichtung (200; 200a), wobei das Kryptografiemodul (100; 100a; 100b) dazu ausgebildet ist, wenigstens einen Speicherbereich (310, 320, 330) einer Speichereinrichtung (300), auf die die Recheneinrichtung (200; 200a) zugreifen kann, zu überprüfen (400) und den Betrieb der wenigstens einen Recheneinrichtung (200; 200a) in Abhängigkeit der Überprüfung (400) zu steuern (410), wobei das Kryptografiemodul (100; 100a; 100b) dazu ausgebildet ist, von der Recheneinrichtung (200; 200a) einen ersten Steuerbefehl (A1) zu empfangen, der wenigstens einen zu überprüfenden Speicherbereich der Speichereinrichtung (300) charakterisiert, und den durch den ersten Steuerbefehl (A1) charakterisierten Speicherbereich zu überprüfen, wobei das Kryptografiemodul (100; 100a; 100b) dazu ausgebildet ist, einen Bootloader (BL) der Recheneinrichtung (200; 200a) zu überprüfen (430), nach erfolgreicher Überprüfung des Bootloaders (BL) eine Ausführung des Bootloaders freizugeben (432), und auf den ersten Steuerbefehl (A1) zu warten (434).

2. Kryptografiemodul (100; 100a; 100b) nach Anspruch 1, wobei das Kryptografiemodul (100; 100a; 100b) dazu ausgebildet ist, die Überprüfung (400) des wenigstens einen Speicherbereichs (310, 320, 330) unter Verwendung eines schlüsselbasierten Nachrichtenauthentifizierungscodes, CMAC, auszuführen.

3. Kryptografiemodul (100; 100a; 100b) nach wenigstens einem der vorstehenden Ansprüche, wobei das Kryptografiemodul (100; 100a; 100b) eine, vorzugsweise in das Kryptografiemodul (100; 100a; 100b) integrierte, Speichereinheit (102) zur Speicherung wenigstens eines Referenzwerts (R) und/oder eines Referenzlayouts für den wenigstens einen Speicherbereich (310, 320, 330) aufweist.

4. Kryptografiemodul (100; 100a; 100b) nach Anspruch 3, wobei das Kryptografiemodul (100; 100a; 100b) dazu ausgebildet ist, die Überprüfung (400) in Abhängigkeit des Referenzwerts (R) auszuführen.

5. Kryptografiemodul (100; 100a; 100b) nach wenigstens einem der vorstehenden Ansprüche, wobei das Kryptografiemodul (100; 100a; 100b) dazu ausgebildet ist, die Recheneinrichtung (200; 200a) in einem Resetzustand zu halten, wobei insbesondere das Kryptografiemodul (100; 100a; 100b) dazu ausgebildet ist, die Recheneinrichtung (200; 200a) solange in dem Resetzustand zu halten, bis die Überprüfung (400) abgeschlossen ist.

6. Kryptografiemodul (100; 100a; 100b) nach wenigstens einem der vorstehenden Ansprüche, wobei das Kryptografiemodul (100; 100a; 100b) dazu ausgebildet ist, im Rahmen der Überprüfung (400) festzustellen, ob ein Inhalt des wenigstens einen Speicherbereichs (310, 320, 330) einem vorgebbaren Speicherinhalt entspricht, und einen oder den Resetzustand für die Recheneinrichtung (200; 200a) zu beenden, wenn die Überprüfung (400) ergeben hat, dass der Inhalt des wenigstens einen Speicherbereichs (310, 320, 330) dem vorgebbaren Speicherinhalt entspricht, wobei insbesondere das Kryptografiemodul (100; 100a; 100b) dazu ausgebildet ist, dann, wenn die Überprüfung (400) ergeben hat, dass der Inhalt des wenigstens einen Speicherbereichs (310, 320, 330) nicht dem vorgebbaren Speicherinhalt entspricht, die Recheneinrichtung (200; 200a) weiter in dem Resetzustand zu halten.

7. Kryptografiemodul (100; 100a; 100b) nach wenigstens einem der vorstehenden Ansprüche, wobei der wenigstens eine Speicherbereich (310, 320, 330) wenigstens ein zur Ausführung auf der Recheneinrichtung (200; 200a) vorgesehenes Computerprogramm, insbesondere einen Bootloader für die Recheneinrichtung (200; 200a), aufweist.

8. Kryptografiemodul (100; 100a; 100b) nach wenigstens einem der vorstehenden Ansprüche, wobei das Kryptografiemodul (100; 100a; 100b) dazu ausgebildet ist, der Recheneinrichtung (200; 200a) erste Daten, insbesondere kryptografische Schlüssel, bereitzustellen, wobei insbesondere das Kryptografiemodul (100; 100a; 100b) dazu ausgebildet ist, der Recheneinrichtung (200; 200a) in Abhängigkeit der Überprüfung (400) die ersten Daten nur teilweise oder gar nicht zur Verfügung zu stellen.

9. Kryptografiemodul (100; 100a; 100b) nach wenigstens einem der vorstehenden Ansprüche, wobei das Kryptografiemodul (100; 100a; 100b) zumindest teilweise, insbesondere vollständig, als Hardwareschaltung ausgebildet ist.

10. Verfahren zum Betreiben eines Kryptografiemoduls (100; 100a; 100b) zur zumindest zeitweisen Steuerung eines Betriebs wenigstens einer Recheneinrichtung (200; 200a), wobei das Kryptografiemodul (100; 100a; 100b) wenigstens einen Speicherbereich (310, 320, 330) einer Speichereinrichtung (300), auf die die Recheneinrichtung (200; 200a) zugreifen kann, überprüft (400) und den Betrieb der wenigstens einen Recheneinrichtung (200; 200a) in Abhängigkeit der Überprüfung (400) steuert (410), wobei das Kryptografiemodul (100; 100a; 100b) von der Recheneinrichtung (200; 200a) einen ersten Steuerbefehl (A1) empfängt, der wenigstens einen zu überprüfenden Speicherbereich der Speichereinrichtung (300) charakterisiert, und den durch den ersten Steuerbefehl (A1) charakterisierten Speicherbereich überprüft, wobei das Kryptografiemodul (100; 100a; 100b) einen Bootloader (BL) der Recheneinrichtung (200; 200a) überprüft (430), nach erfolgreicher Überprüfung des Bootloaders (BL) eine Ausführung des Bootloaders freigibt (432) und auf den ersten Steuerbefehl (A1) wartet (434).

11. Verfahren nach Anspruch 10, wobei das Kryptografiemodul (100; 100a; 100b) die Recheneinrichtung (200; 200a) in einem Resetzustand hält, wobei insbesondere das Kryptografiemodul (100; 100a; 100b) die Recheneinrichtung (200; 200a) solange in dem Resetzustand hält, bis die Überprüfung (400) abgeschlossen ist.

12. Verfahren nach wenigstens einem der Ansprüche 10 bis 11, wobei das Kryptografiemodul (100; 100a; 100b) im Rahmen der Überprüfung (400) feststellt, ob ein Inhalt des wenigstens einen Speicherbereichs (310, 320, 330) einem vorgebbaren Speicherinhalt entspricht und einen oder den Resetzustand für die Recheneinrichtung (200; 200a) beendet, wenn die Überprüfung (400) ergeben hat, dass der Inhalt des wenigstens einen Speicherbereichs (310, 320, 330) dem vorgebbaren Speicherinhalt entspricht, wobei insbesondere das Kryptografiemodul (100; 100a; 100b) dann, wenn die Überprüfung (400) ergeben hat, dass der Inhalt des wenigstens einen Speicherbereichs (310, 320, 330) nicht dem vorgebbaren Speicherinhalt entspricht, die Recheneinrichtung (200; 200a) weiter in dem Resetzustand hält.

13. Recheneinrichtung (200; 200a) mit wenigstens einem Kryptografiemodul (100; 100a; 100b) nach wenigstens einem der Ansprüche 1 bis 9, wobei die Recheneinrichtung (200; 200a) dazu ausgebildet ist, einen ersten Steuerbefehl (A1) an das wenigstens eine Kryptografiemodul (100; 100a; 100b) zu senden, wobei der erste Steuerbefehl (A1) wenigstens einen zu überprüfenden Speicherbereich der Speichereinrichtung (300) charakterisiert.

14. Recheneinrichtung (200; 200a) nach Anspruch 13, wobei die Recheneinrichtung (200; 200a) dazu ausgebildet ist, einen zweiten Steuerbefehl (A2) von dem wenigstens einen Kryptografiemodul (100; 100a; 100b) zu empfangen, wobei der zweite Steuerbefehl (A2) eine erfolgreiche Überprüfung des zu überprüfenden Speicherbereichs der Speichereinrichtung (300) signalisiert, wobei insbesondere die Recheneinrichtung (200; 200a) dazu ausgebildet ist, nach Empfang des zweiten Steuerbefehls (A2) wenigstens ein Computerprogramm (SW2) auszuführen, das mit dem zu überprüfenden Speicherbereich assoziiert ist, insbesondere das zumindest teilweise, vorzugsweise vollständig, in dem zu überprüfenden Speicherbereich liegt.

## Claims

1. Cryptography module (100; 100a; 100b) for at least temporarily controlling operation of at least one computing device (200; 200a), wherein the cryptography module (100; 100a; 100b) is designed to inspect (400) at least one memory area (310, 320, 330) of a memory device (300) that the computing device (200; 200a) is able to access and to control (410) the operation of the at least one computing device (200; 200a) on the basis of the inspection (400), wherein the cryptography module (100; 100a; 100b) is designed to receive a first control instruction (A1) from the computing device (200; 200a), which control instruction characterizes at least one memory area to be inspected of the memory device (300), and to inspect the memory area **characterized by** the first control instruction (A1), wherein the cryptography module (100; 100a; 100b) is designed to inspect (430) a boot loader (BL) of the computing device (200; 200a), to authorize (432) execution of the boot loader following successful inspection of the boot loader (BL), and to wait (434) for the first control instruction (A1).

2. Cryptography module (100; 100a; 100b) according to Claim 1, wherein the cryptography module (100; 100a; 100b) is designed to carry out the inspection (400) of the at least one memory area (310, 320, 330) using a key-based message authentication code, CMAC.

3. Cryptography module (100; 100a; 100b) according to at least one of the preceding claims, wherein the cryptography module (100; 100a; 100b) has a memory unit (102), preferably integrated into the cryptography module (100; 100a; 100b), for storing in memory at least one reference value (R) and/or one reference layout for the at least one memory area (310, 320, 330).

4. Cryptography module (100; 100a; 100b) according to Claim 3, wherein the cryptography module (100; 100a; 100b) is designed to carry out the inspection (400) on the basis of the reference value (R).

5. Cryptography module (100; 100a; 100b) according to at least one of the preceding claims, wherein the cryptography module (100; 100a; 100b) is designed to keep the computing device (200; 200a) in a reset state, wherein the cryptography module (100; 100a; 100b) is designed in particular to keep the computing device (200; 200a) in the reset state until the inspection (400) is complete.

6. Cryptography module (100; 100a; 100b) according to at least one of the preceding claims, wherein the cryptography module (100; 100a; 100b) is designed, as part of the inspection (400), to establish whether content of the at least one memory area (310, 320, 330) corresponds to predefinable memory content, and to end a or the reset state for the computing device (200; 200a) if the inspection (400) has revealed that the content of the at least one memory area (310, 320, 330) corresponds to the predefinable memory content, wherein the cryptography module (100; 100a; 100b) is designed, in particular if the inspection (400) has revealed that the content of the at least one memory area (310, 320, 330) does not correspond to the predefinable memory content, to continue to keep the computing device (200; 200a) in the reset state.

7. Cryptography module (100; 100a; 100b) according to at least one of the preceding claims, wherein the at least one memory area (310, 320, 330) contains at least one computer program intended to be executed on the computing device (200; 200a), in particular a boot loader for the computing device (200; 200a).

8. Cryptography module (100; 100a; 100b) according to at least one of the preceding claims, wherein the cryptography module (100; 100a; 100b) is designed to provide the computing device (200; 200a) with first data, in particular cryptographic keys, wherein the cryptography module (100; 100a; 100b) is designed in particular to make the first data available only partially or not at all to the computing device (200; 200a) on the basis of the inspection (400).

9. Cryptography module (100; 100a; 100b) according to at least one of the preceding claims, wherein the cryptography module (100; 100a; 100b) is designed at least partially, in particular completely, as a hardware circuit.

10. Method for operating a cryptography module (100; 100a; 100b) for at least temporarily controlling operation of at least one computing device (200; 200a), wherein the cryptography module (100; 100a; 100b) inspects (400) at least one memory area (310, 320, 330) of a memory device (300) that the computing device (200; 200a) is able to access and controls (410) the operation of the at least one computing device (200; 200a) on the basis of the inspection (400), wherein the cryptography module (100; 100a; 100b) receives a first control instruction (A1) from the computing device (200; 200a), which control instruction characterizes at least one memory area to be inspected of the memory device (300), and inspects the memory area **characterized by** the first control instruction (A1), wherein the cryptography module (100; 100a; 100b) inspects (430) a boot loader (BL) of the computing device (200; 200a), authorizes (432) execution of the boot loader following successful inspection of the boot loader (BL), and waits (434) for the first control instruction (A1).

11. Method according to Claim 10, wherein the cryptography module (100; 100a; 100b) keeps the computing device (200; 200a) in a reset state, wherein the cryptography module (100; 100a, 100b) in particular keeps the computing device (200; 200a) in the reset state until the inspection (400) is complete.

12. Method according to at least one of Claims 10 to 11, wherein the cryptography module (100; 100a; 100b), as part of the inspection (400), establishes whether content of the at least one memory area (310, 320, 330) corresponds to predefinable memory content, and ends a or the reset state for the computing device (200; 200a) if the inspection (400) has revealed that the content of the at least one memory area (310, 320, 330) corresponds to the predefinable memory content, wherein the cryptography module (100; 100a; 100b), in particular if the inspection (400) has revealed that the content of the at least one memory area (310, 320, 330) does not correspond to the predefinable memory content, continues to keep the computing device (200; 200a) in the reset state.

13. Computing device (200; 200a) having at least one cryptography module (100; 100a; 100b) according to at least one of Claims 1 to 9, wherein the computing device (200; 200a) is designed to transmit a first control instruction (A1) to the at least one cryptography module (100; 100a; 100b), wherein the first control instruction (A1) characterizes at least one memory area to be inspected of the computing device (300).

14. Computing device (200; 200a) according to Claim 13, wherein the computing device (200; 200a) is designed to receive a second control instruction (A2) from the at least one cryptography module (100; 100a; 100b), wherein the second control instruction (A2) signals a successful inspection of the memory area to be inspected of the memory device (300), wherein the computing device (200; 200a) is designed in particular, following receipt of the second control instruction (A2), to execute at least one computer program (SW2) that is associated with the memory area to be inspected, in particular that is located at least partially, preferably completely, in the memory area to be inspected.

## Revendications

1. Module cryptographique (100 ; 100a ; 100b) destiné à commander au moins temporairement un fonctionnement d'au moins un dispositif de calcul (200 ; 200a), le module cryptographique (100 ; 100a ; 100b) étant configuré pour vérifier (400) au moins une zone de mémoire (310, 320, 330) d'un dispositif de mémorisation (300) auquel peut accéder le dispositif de calcul (200 ; 200a) et pour commander (410) le fonctionnement de l'au moins un dispositif de calcul (200 ; 200a) en fonction de la vérification (400), le module cryptographique (100 ; 100a ; 100b) étant configuré pour recevoir une première instruction de commande (A1) de la part du dispositif de calcul (200 ; 200a), laquelle caractérise au moins une zone de mémoire à vérifier du dispositif de mémorisation (300), et pour vérifier la zone de mémoire **caractérisée par** la première instruction de commande (A1), le module cryptographique (100 ; 100a ; 100b) étant configuré pour vérifier (430) un chargeur d'amorçage (BL) du dispositif de calcul (200 ; 200a), valider (432) une exécution du chargeur d'amorçage après une vérification réussie du chargeur d'amorçage (BL) et attendre (434) la première instruction de commande (A1).

2. Module cryptographique (100 ; 100a ; 100b) selon la revendication 1, le module cryptographique (100 ; 100a ; 100b) étant configuré pour effectuer la vérification (400) de l'au moins une zone de mémoire (310, 320, 330) en utilisant un code d'authentification de message basé sur une clé, CMAC.

3. Module cryptographique (100 ; 100a ; 100b) selon au moins l'une des revendications précédentes, le module cryptographique (100 ; 100a ; 100b) possédant une unité de mémoire (102), de préférence intégrée dans le module cryptographique (100 ; 100a ; 100b), servant à mémoriser au moins une valeur de référence (R) et/ou une implantation de référence de l'au moins une zone de mémoire (310, 320, 330).

4. Module cryptographique (100 ; 100a ; 100b) selon la revendication 3, le module cryptographique (100 ; 100a ; 100b) étant configuré pour effectuer la vérification (400) en fonction de la valeur de référence (R).

5. Module cryptographique (100 ; 100a ; 100b) selon au moins l'une des revendications précédentes, le module cryptographique (100 ; 100a ; 100b) étant configuré pour maintenir le dispositif de calcul (200 ; 200a) dans un état de réinitialisation, le module cryptographique (100 ; 100a ; 100b) étant notamment configuré pour maintenir le dispositif de calcul (200 ; 200a) dans l'état de réinitialisation jusqu'à ce que la vérification (400) soit terminée.

6. Module cryptographique (100 ; 100a ; 100b) selon au moins l'une des revendications précédentes, le module cryptographique (100 ; 100a ; 100b) étant configuré pour déterminer, dans le cadre de la vérification (400), si un contenu de l'au moins une zone de mémoire (310, 320, 330) correspond à un contenu de mémoire pouvant être prédéfini et pour mettre fin à un ou à l'état de réinitialisation pour le dispositif de calcul (200 ; 200a) lorsque la vérification (400) a eu pour résultat que le contenu de l'au moins une zone de mémoire (310, 320, 330) correspond au contenu de mémoire pouvant être prédéfini, le module cryptographique (100 ; 100a ; 100b) étant notamment configuré pour, lorsque la vérification (400) a eu pour résultat que le contenu de l'au moins une zone de mémoire (310, 320, 330) ne correspond pas au contenu de mémoire pouvant être prédéfini, continuer de maintenir le dispositif de calcul (200 ; 200a) dans l'état de réinitialisation.

7. Module cryptographique (100 ; 100a ; 100b) selon au moins l'une des revendications précédentes, l'au moins une zone de mémoire (310, 320, 330) possédant au moins un programme informatique prévu pour une exécution sur le dispositif de calcul (200 ; 200a), notamment un chargeur d'amorçage pour le dispositif de calcul (200 ; 200a) .

8. Module cryptographique (100 ; 100a ; 100b) selon au moins l'une des revendications précédentes, le module cryptographique (100 ; 100a ; 100b) étant configuré pour fournir des premières données notamment des clés cryptographiques, au dispositif de calcul (200 ; 200a), le module cryptographique (100 ; 100a ; 100b) étant notamment configuré pour, en fonction de la vérification (400), mettre les premières données à disposition du dispositif de calcul (200 ; 200a) seulement partiellement ou pas du tout.

9. Module cryptographique (100 ; 100a ; 100b) selon au moins l'une des revendications précédentes, le module cryptographique (100 ; 100a ; 100b) étant au moins partiellement, notamment entièrement, réalisé sous la forme d'un circuit matériel.

10. Procédé pour faire fonctionner un module cryptographique (100 ; 100a ; 100b) destiné à commander au moins temporairement un fonctionnement d'au moins un dispositif de calcul (200 ; 200a), le module cryptographique (100 ; 100a ; 100b) vérifiant (400) au moins une zone de mémoire (310, 320, 330) d'un dispositif de mémorisation (300) auquel peut accéder le dispositif de calcul (200 ; 200a) et commandant (410) le fonctionnement de l'au moins un dispositif de calcul (200 ; 200a) en fonction de la vérification (400), le module cryptographique (100 ; 100a ; 100b) recevant une première instruction de commande (A1) de la part du dispositif de calcul (200 ; 200a), laquelle caractérise au moins une zone de mémoire à vérifier du dispositif de mémorisation (300), et vérifiant la zone de mémoire **caractérisée par** la première instruction de commande (A1), le module cryptographique (100 ; 100a ; 100b) vérifiant (430) un chargeur d'amorçage (BL) du dispositif de calcul (200 ; 200a), validant (432) une exécution du chargeur d'amorçage après une vérification réussie du chargeur d'amorçage (BL) et attendant (434) la première instruction de commande (A1).

11. Procédé selon la revendication 10, le module cryptographique (100 ; 100a ; 100b) maintenant le dispositif de calcul (200 ; 200a) dans un état de réinitialisation, le module cryptographique (100 ; 100a ; 100b) maintenant notamment le dispositif de calcul (200 ; 200a) dans l'état de réinitialisation jusqu'à ce que la vérification (400) soit terminée.

12. Procédé selon au moins l'une des revendications 10 et 11, le module cryptographique (100 ; 100a ; 100b) déterminant, dans le cadre de la vérification (400), si un contenu de l'au moins une zone de mémoire (310, 320, 330) correspond à un contenu de mémoire pouvant être prédéfini et mettant fin à un ou à l'état de réinitialisation pour le dispositif de calcul (200 ; 200a) lorsque la vérification (400) a eu pour résultat que le contenu de l'au moins une zone de mémoire (310, 320, 330) correspond au contenu de mémoire pouvant être prédéfini, le module cryptographique (100 ; 100a ; 100b), lorsque la vérification (400) a eu pour résultat que le contenu de l'au moins une zone de mémoire (310, 320, 330) ne correspond pas au contenu de mémoire pouvant être prédéfini, continuant notamment de maintenir le dispositif de calcul (200 ; 200a) dans l'état de réinitialisation.

13. Dispositif de calcul (200 ; 200a) comprenant au moins un module cryptographique (100 ; 100a ; 100b) selon au moins l'une des revendications 1 à 9, le dispositif de calcul (200 ; 200a) étant configuré pour envoyer une première instruction de commande (A1) à l'au moins un module cryptographique (100 ; 100a ; 100b), la première instruction de commande (A1) caractérisant au moins une zone de mémoire à vérifier du dispositif de mémorisation (300) .

14. Dispositif de calcul (200 ; 200a) selon la revendication 13, le dispositif de calcul (200 ; 200a) étant configuré pour recevoir une deuxième instruction de commande (A2) en provenance de l'au moins un module cryptographique (100 ; 100a ; 100b), la deuxième instruction de commande (A2) signalant une vérification réussie de la zone de mémoire à vérifier du dispositif de mémorisation (300), le dispositif de calcul (200 ; 200a) étant notamment configuré pour, après la réception de la deuxième instruction de commande (A2), exécuter au moins un programme informatique (SW2) qui est associé à la zone de mémoire à vérifier, notamment qui se trouve au moins partiellement, de préférence entièrement, dans la zone de mémoire à vérifier.
